# EUROPEAN PATENT SPECIFICATION

(11) **EP 0 494 611 B1**
(45) Date of publication and mention of the grant of the patent: **11.10.1995**
(21) Application number: 92100074.1
(22) Date of filing: 03.01.1992
(51) Int. Cl.: H02K 1/26, H02K 3/16, H02K 3/487

(54) **Rotor of rotary electric-machine**
Anker für eine drehende elektrische Maschine
Rotor de machine tournante électrique

(30) Priority: 10.01.1991 JP 1545/91
(43) Date of publication of application: 15.07.1992
(73) Proprietor: KABUSHIKI KAISHA TOSHIBA, Kawasaki-shi, Kanagawa-ken 210 (JP)
(72) Inventor: Nagano, Susumu, 1-chome, Minato-ku, Toyko 105 (JP); Mozumi, Takashi, 1-chome, Minato-ku, Toyko 105 (JP); Futaki, Masatoshi, 1-chome, Minato-ku, Toyko 105 (JP)
(74) Representative: Henkel, Feiler, Hänzel & Partner

(56) References cited:
- EP-A- 0 023 073
- DE-A- 2 406 861
- DE-B- 1 060 981
- DE-B- 1 097 546
- PATENT ABSTRACTS OF JAPAN vol. 4, no. 1 (E-163) (125) 8 January 1980 & JP-A-54 142 502 (TOKYO SHIBAURA DENKI K.K.) 6 November 1979

## Description

The present invention relates generally to a rotor of a rotary electric-machine, and more particularly to a rotor of a rotary electric-machine wherein no damage is caused to the respective parts of the rotor even if a high surface current flows over the surface of the rotor when the rotary electric-machine is stopped or rotated at low speed.

In a rotary electric-machine, in some cases, a high surface current flows over the surface of the rotor as a result of a negative-phase current flowing at the time of a damper accident. In the case where a rectifier load or a current load is connected to a power source circuit of the rotary electric-machine, a harmonic current occurs, in some cases, in the power source circuit and, as a result of the harmonic current, a high surface current flows over the surface of the rotor. If such a high surface current flows over the surface of the rotor, the rotor may be damaged.

In order to minimize such damage, a damper winding is rotated around the rotor in the prior art rotors, or the magnitude of harmonic current is limited. In general, such a current may flow even when the rotor electric-machine is driven at a rated speed.

In the meantime, in a salient-pole machine type rotary electric-machine, an armature winding is supplied, in general, with a rated full-voltage or reduced voltage, and a damper winding is supplied actively, with an electric current, and a torque is generated. Thereby, the rotary electric-machine is directly started.

However, regarding a rotor of a cylindrical rotary electric-machine of a solid forged rotor type, such as a turbine generator, a small gap exists between a tooth portion and a wedge, and a contact resistance exists between the tooth portion and the wedge is rised by the small gap. Thus, a circuit for causing a surface current to flow is incomplete.

Because of this structure, when the above-mentioned direct actuation method is applied to this type of rotary electric-machine, a high surface current flows through the rotor when the rotary electric-machine is stopped or rotated at low speed, and an arc occurs between contact surfaces of the tooth portion and the wedge. There is a concern that the arc may cause a melt on a specific portion of the rotor.

As means for solving the above drawback, document JP-A-54-142502 discloses a technique wherein an elastic member is inserted under the wedge, thereby applying a pressure to a contact portion between the tooth portion and the wedge and leaving substantially no gap between the tooth portion and the wedge.

By virtue of this means, the circuit for letting the surface current flow is made substantially perfect. Even if the surface current flows over the surface of the rotor when the rotary electric-machine is stopped or rotated at low speed, the surface current flows through the perfect circuit and no melt occurs.

However, in the case of adopting a large-capacity generator system or a specific starting system, the sufficient withstanding capability cannot be obtained by the above means. In particular, insufficiency of withstanding capability is conspicuous in a rotary electric-machine (generator) used in an advanced combined cycle (ACC) which has recently attracted much attention as a high-efficiency generator plant. For example, a static starting method, wherein the generator is used as a motor by means of a thyristor converter and the speed of rotation is limited, is employed as a starting method for the rotary electric machine (generator) used in the ACC.

In this method, owing to conditional limitations of the thyristor converter, a pulse-mode starting operation is performed from a turning drive (normally, several rpm) to 5% to 10% of a rated speed from the turning drive, and a load commutated inverter starting operation is performed to a rotation speed capable of being controlled by a gas turbine.

However, in the pulse-mode starting operation, an equivalent negative-phase current level reaches about 10% of a rated value, and the speed of rotation is about 5% to 10% of a rated value. Thus, it is very difficult to maintain negative-phase withstanding capability.

The above will now be described in greater detail with reference to the accompanying drawings. Fig. 1 shows a technique disclosed in document JP-A-54-142502. As shown in Fig. 1, a coil storing member 12, a stepped portion 14 and a slot 18 having a wedge holder 16 are arranged along the axis of a rotor 10. A plurality of slot 18 are formed along the circumference of the rotor 10. A multi-layered rotor coil 20 is stored in the coil storing member 12 in the slot 18. A block 22, a damper bar 24, an elastic member 26 such as a spring member, and a wedge 28 are arranged in the stepped portion 14 of the slot 18. A plurality of slots 18 and tooth portions 30 are formed along the periphery of the rotor 10.

In the above, the block 20 is situated on the rotor coil 20. The damper bar 24 having a width reaching the stepped portion 14 is situated on the block 22. The elastic member 26 is situated between an end portion of the damper bar 24 and the stepped portion 14. The wedge 28 is fitted in the wedge holder 16 of the slot 18 so as to cover the upper part of the bar 24. The elastic member 26 presses the bar 24 radially, and accordingly presses the wedge 28 on the bar 24 radially. In particular, the inclined portion of the wedge 28 pressed radially abuts firmly on the inclined portion of the wedge holder 16. Thereby, the wedge 28 is held by the wedge holder 16 of the slot 18 with good contact.

With the above structure, even if a high surface current flows through the rotor, the circuit in which the surface current flows is substantially perfect. Thus, even if the surface current flows over the surface of the rotor when the rotary electric-machine is stopped or rotated at low speed, the surface current flows through the perfect circuit and no melt occurs.

While the rotary electric-machine is rotated, only a centrifugal force due to the weight of the rotor 10 itself acts on the rotor 10. A safe and firm rotor structure can be obtained. In addition, since the damper bar 24 is inserted between the wedge 28 and the elastic member 26, a current conduction circuit is constituted between adjacent ones of the wedges 28, and a good contact state is maintained between the damper bar 24 at the end of an iron core and a damper ring (not shown).

In the above structure, however, the damper bar 24 is situated not on the surface of the rotor 10, but within the slot 18. Thus, negative-phase withstanding capability is low.

Prior art document DE-A-10 60 981 discloses a rotor for a rotary electric-machine comprising damper means formed at the tooth portions, for damping a surface current flowing through the core, the pole portions, and the surface of the winding portions. The damper means consists of a damper bar of an electrically conductive material fixed in shallow grooves formed in the tooth portions, and is flush with the surface of the core and also formed at said pole portions.

Further, prior art document DE-A-24 06 861 describes a dampening cage wherein damper means consisting of electrically conductive material are inserted and fixed in shallow grooves of pole portions and/or tooth portions of the rotor of electrical machines. Further damper means may be formed at at least one of the slots.

It is an object of the present invention to provide a highly reliable rotor of a rotary electric-machine wherein no damage is caused to the respective parts of the rotor, even if current flow over the rotor surface when the rotary electric-machine is stopped or rotated at low speed.

This object can be achieved by a rotor of a rotary electric-machine as specified in any one of claims 1 and 3.

Preferred embodiments of the invention are described especially in claims 2, 4 and 5.

This invention can be more fully understood from the following detailed description when taken in conjunction with the accompanying drawings, in which:
Fig. 1 is an enlarged cross-sectional view of an important portion in an example of a conventional rotor;
Fig. 2 is an enlarged cross-sectional view of a non-magnetic pole portion of a rotor of a rotor electric-machine;
Fig. 3 is a perspective view showing a damper bar and a bolt of damper means in Fig. 2;
Fig. 4 shows a magnetic flux distribution in a rotor and an air gap in the case where an equivalent negative-phase current flows in an ordinary rotor with no damper bar;
Fig. 5 shows a magnetic flux distribution in a rotor and an air gap in the case where an equivalent negative-phase current flows in a rotor with a damper bar in a slot portion;
Fig. 6 shows a magnetic flux distribution in a rotor and an air gap in the case where an equivalent negative-phase current flows in an ordinary rotor with a damper bar between slots;
Fig. 7 is a graph showing comparison data of the amount of loss of various rotor structures;
Fig. 8 is an enlarged cross-sectional view of a non-magnetic pole portion according to a first embodiment of the rotor of the rotary electric-machine of the present invention;
Fig. 9 is a perspective view showing a wedge and an elastic member of damper means of Fig. 8;
Fig. 10 is an enlarged cross-sectional view of a non-magnetic pole portion of the cylindrical rotor of a rotary electric-machine;
Fig. 11 is a perspective view showing a hollow bar of the damper means in Fig. 10;
Fig. 12 is a perspective view illustrating a pressure-coupling method for the hollow bar of the damper means in Fig. 10;
Fig. 13 is a cross-sectional view of a core portion of a rotor according to a second embodiment of the rotary electric-machine of the invention;
Fig. 14 is a partial cross-sectional perspective view of the same embodiment;
Fig. 15 is a cross-sectional view of a core portion of a rotor according to a third embodiment of the rotary electric machine of the invention;
Fig. 16 is an enlarged cross-sectional view showing a wedge, elastic member and magnetic material of damper means in Fig. 15;
Fig. 17 shows a magnetic flux distribution in a rotor and an air gap in the case where an equivalent negative-phase current flows in a rotor structure with a damper bar in a non-magnetic pole portion;
Fig. 18 is a cross-sectional view of a core portion of a rotor according to a fourth embodiment of the rotary electric-machine of the invention;
Fig. 19 shows a magnetic flux distribution in a rotor and an air gap in the case where an equivalent negative-phase current flows in a rotor structure damper bars between slots and at non-magnetic pole portions; and
Fig. 20 shows surface temperatures of the rotor.

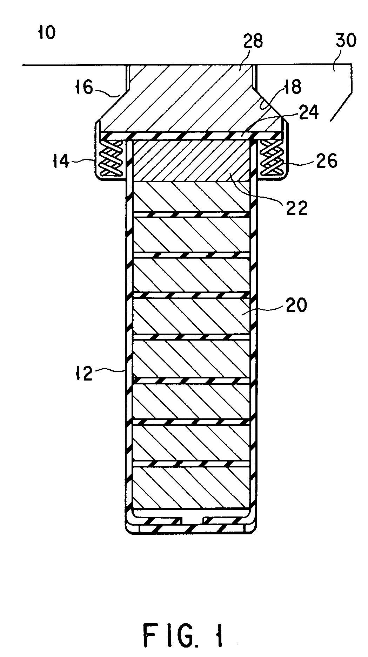

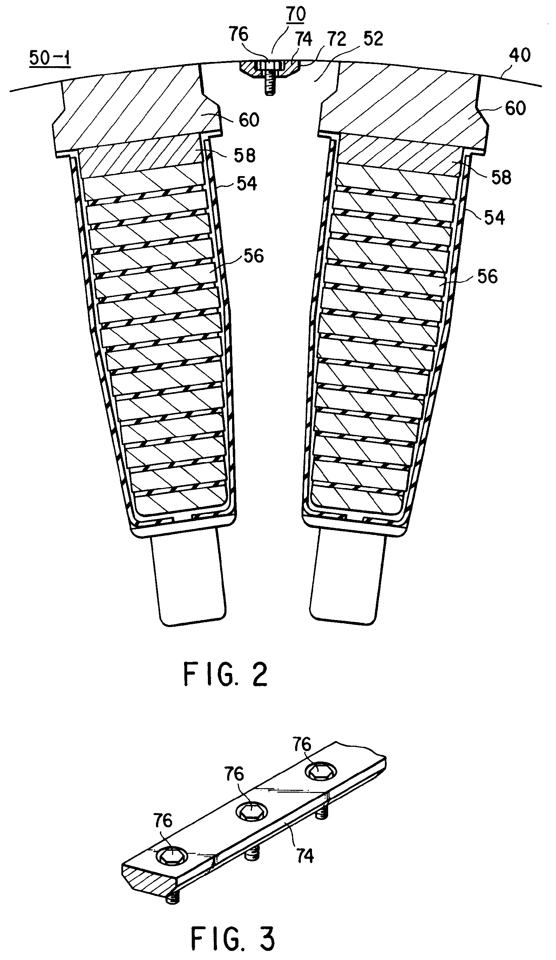

In Fig. 2 and following figures, structural parts common with Fig. 1 are denoted by like reference numerals.

A rotor of a rotary electric-machine is a rotor of a horizontal type synchronous generator used in a thermal power system. The present invention, however, is applicable not only to the rotor of the synchronous generator, but to rotors of an induction motor, an induction generator, a synchronous motor, a synchronous condenser, a synchronous convertor, a direct current motor, a direct current generator and a rotary convertor. Typically, the present invention is applied to a cylindrical rotor.

In addition, the rotor of the rotary electric-machine shown as preferred embodiments is a two-pole type rotor. There is, however, a rotary electric-machine such as a synchronous generator having three or more poles. This invention is also applicable to a multi-pole type rotor. The two-pole type rotor has a first magnetic pole portion and a second magnetic pole portion along the axis of the rotor. The first and second magnetic pole portions function as an S-pole and an N-pole, respectively. The two-pole type rotor is divided into four parts in the circumferential direction of the rotor. The first division part is a first magnetic-pole portion, the second division a first non-magnetic-pole portion, the third division part a second magnetic-pole portion, and the fourth division part a second non-magnetic-pole portion. The first and second non-magnetic-pole portions are constituted by slots storing rotor coils and tooth portions. This type of rotor is a solid-forged cylindrical rotor shaft, and the rotor shaft and a core are integrated. The rotor shown in Fig. 2 is characterized by the non-magnetic-pole portion constituted by a plurality of slots and tooth portions.

As is shown in Fig. 2, in the rotor 50-1 damper means 70 is provided at a tooth portion 52 of the non-magnetic pole portion of a cylindrical rotor iron core 40. The damper means 70 may be provided at all tooth portions 52 or at some of them. Slots 54 are formed on both sides of the tooth portion 52. A rotor coil 56 is stored in the slot 54. A block is situated on the upper part of the rotor coil 56. The rotor coil 56 and block 58 are held in the slot 54 by means of a wedge 60.

Each damper means 70, as shown in Fig. 3, comprises a groove 72 formed in the tooth portion 52, a damper bar 74 of an electrically conductive material situated in the groove 72, and a plurality of bolts 76 for firmly fixing the damper bar 74 to the tooth portion 52.

As has been stated above, in the solid-forged cylindrical rotor according to Fig. 2, current circuits are formed all over the surface of the rotor. In other words, surface currents flow through not only the structural parts of the rotor, but also contact portions between the holding rings and damper rings, contacts between adjacent wedges 60, and contact portions between the wedges 60 and tooth portions 52. On the other hand, when the rotation of the rotor is stopped, no centrifugal force is produced, and when the rotation speed of the rotor is low, the centrifugal force is weak; thus, a great force is not exerted to the respective parts of the rotor, and these contact portions are in an incomplete contact state.

Regarding this point, in the rotor of Fig. 2, the shallow groove 72 is formed at the tooth portion 52 of the rotor surface between the slots for storing rotor coils 56, as shown in Figs. 2 and 3, and the damper bar 74 of electrically conductive material is inserted in the shallow groove 72. And this damper bar 74 is firmly fixed to the tooth portion 52 by means of bolts 76.

By providing the damper means 70 at the tooth portion 52, the damper bar 74 is pressed on the tooth portion 52, and the contact surfaces of the tooth portion 52 and damper bar 74 are constantly pressed thereby maintaining good contact. Even if current is let to flow over the rotor surface, no damage is caused to the respective parts of the rotor, in particular, tooth portions 52 and damper bars 74. During rotation, only a centrifugal force due to the weight of the rotor itself is exerted to the rotor, and a safe and firm structure can be obtained.

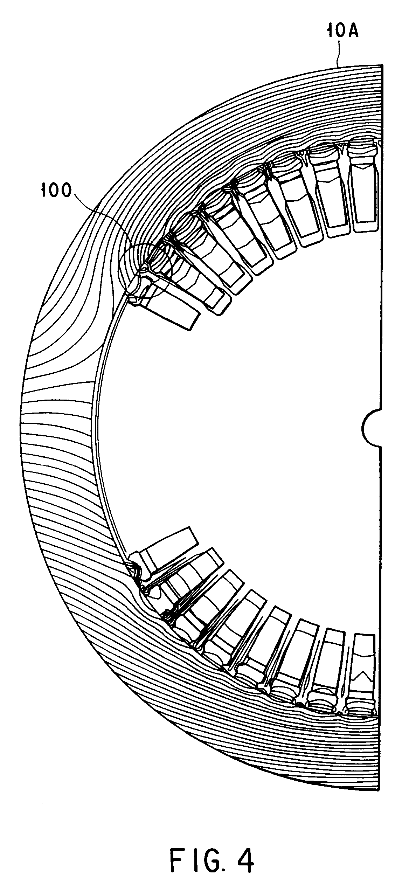

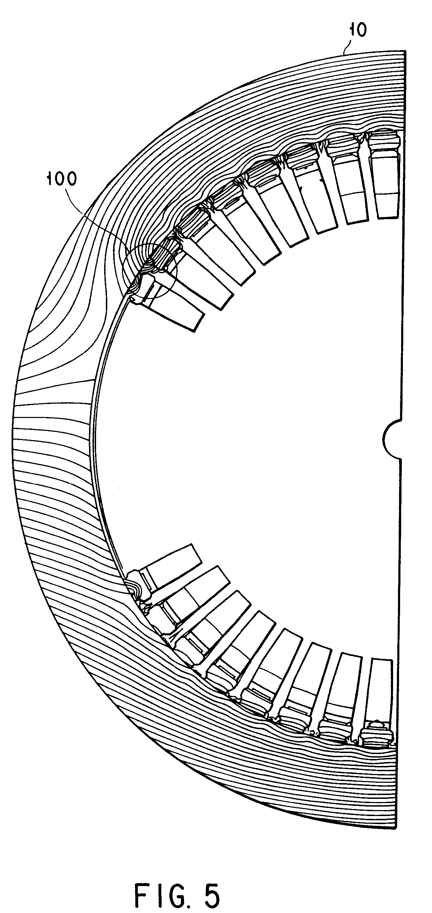

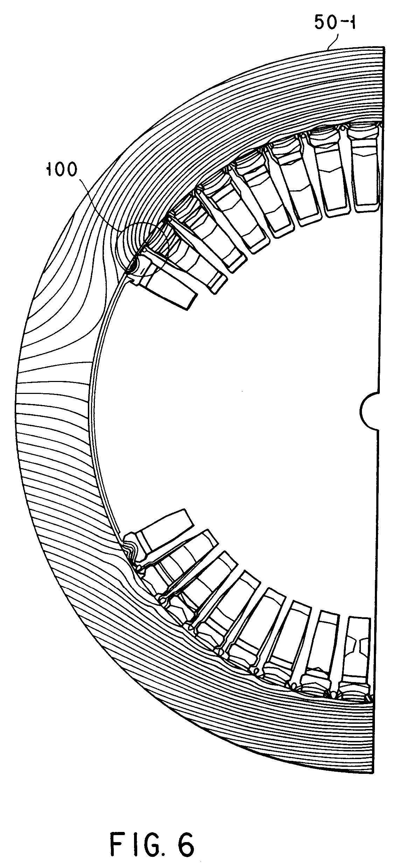

The above will be explained on the basis of analysis data. Fig. 4 shows a magnetic flux distribution in the rotor and air gap in the case where an equivalent negative-phase current flows in an ordinary rotor 10A with no damper bar. Fig. 5 shows a magnetic flux distribution in the rotor and air gap in the case where an equivalent negative-phase current flows in the rotor 10 (JP-A-54-142502) with the damper bar in the slot portion. Fig. 6 shows a magnetic flux distribution in the rotor and air gap in the case where an equivalent negative-phase current flows in a rotor 50-1 with damper means 70 at the tooth portion according to the rotor of Fig. 2.

Regions 100 to be noticed in Figs. 4, 5 and 6 are compared. Compared to the magnetic flux distribution of Fig. 4 of the normal rotor structure with no damper bar, the rotor structure of Fig. 5 with the damper bar in the slot portion has less loss occurring in the tooth portion 52 by the effect of the damper bar, and the amount of magnetic flux entering the tooth portion 52 decreases. In addition, in the rotor structure according to Fig. 2 wherein the damper means 70 is provided at the tooth portion, the amount of magnetic flux entering the tooth portion 52 is further reduced by the advantage of situating the damper bar 74 of electrically conductive material on the rotor surface, and the loss occurring in the tooth portion 52 is further decreased.

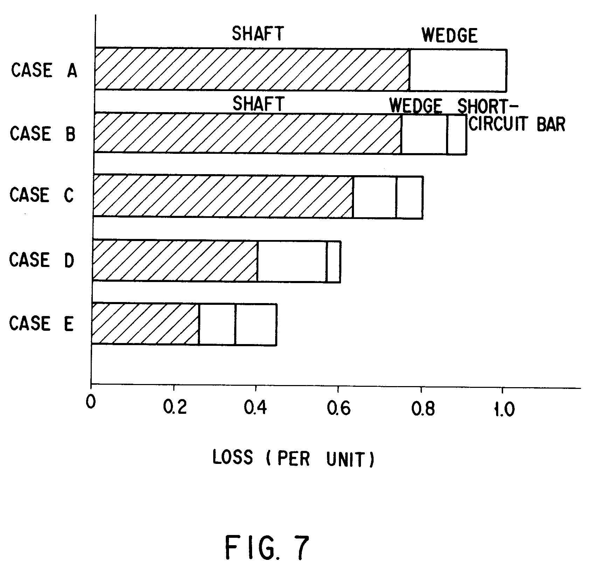

The analysis data is shown in Fig. 7. The loss in the ordinary rotor structure (case A) with no damper bar is supposed to be 1.0 per unit. The loss in the rotor structure (case B) with the damper bar in the slop portion is 0.9 per unit, and the loss in the rotor structure (case C) with damper means 70 at the tooth portion according to the rotor of Fig. 2 is 0.8 per unit. According to the rotor of Fig. 2, without damaging the tooth portions and wedges, a stronger rotor of the rotary electric-machine can be obtained and the negative-phase withstanding capability is enhanced.

As stated above, the rotor 50-1 of the rotary electric-machine according to Fig. 2 is provided with the damper means 70, wherein the shallow groove 72 is formed at the tooth portion 52 between between the slots 54 for storing rotor coils 56, and the fixing member or damper bar 74 of electrically conductive material is situated in the shallow groove 72. And this damper bar 74 is firmly fixed to the tooth portion 52 by means of bolts 76.

When the rotary electric-machine is stopped or rotated at low speed, the fixing member or the damper bar 74 is pressed on the tooth portion 52, and the contact surfaces (receiving centrifugal force during rotation) of the tooth portion 52 and damper bar 74 are constantly pressed thereby maintaining good contact. Even if current flows over the rotor surface, no damage is caused to the respective parts of the rotor, in particular, tooth portions 52 and damper bars 74. Thus, the rotor 50-1 of the rotary electric-machine with high reliability can be obtained.

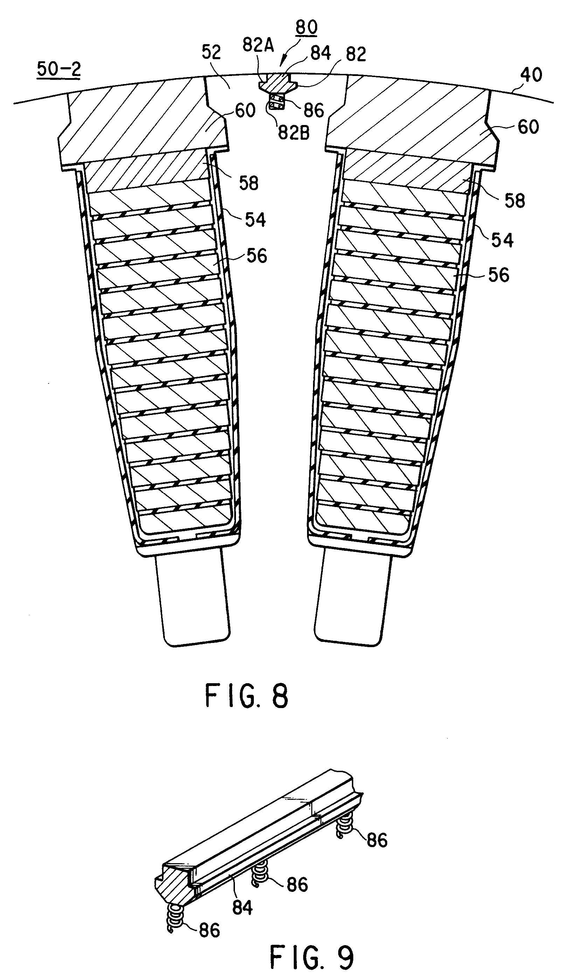

A rotor 50-2 of the rotary electric-machine according to a first embodiment of the invention will now be described. As shown in Fig. 8, the rotor 50-2 has damper means 80 at a tooth portion 52 of a core portion of a cylindrical rotor core 40. The damper means 80 may be provided at all tooth portions 52 or at some of them. Slots 54 are formed on both sides of the tooth portion 52. A rotor coil 56 is stored in each slot 54. A block 58 is situated on the upper part of the rotor coil 56. The rotor coil 56 and block 58 are held in the slot 54 by means of a wedge 60.

As shown in Fig. 9, each damper means 80 is formed at the tooth portion 52, and it comprises a damper wedge insertion groove portion 82 constituted by a damper wedge insertion portion 82A and a spring storing portion 82B, a damper wedge 84 of an electrically conductive material inserted in the insertion portion 82A of the insertion groove portion 82, and a plurality of springs 86 stored in the spring storing portion 82B for urging the damper wedge 84 radially.

Specifically, as shown in Figs. 8 and 9, the damper wedge insertion groove portion 82 is formed at the tooth portion 52 between slots 54 for storing rotor coils 56. The damper wedge 84 or fixing member of electrically conductive material is inserted in the insertion groove portion 82. In addition, the springs 86 or elastic members for urging the damper wedge 84 in the radially outward direction of the core or towards the tooth portion 52 are inserted in the insertion groove portion 84.

In the present embodiment, the damper wedge 84 is pressed on the tooth portion by the springs 86. Thus, the contact surfaces of the tooth portion 52 and the wedge 60 are constantly pressed thereby maintaining good contact. Even if current is let to flow over the rotor surface, no damage is caused to the respective parts of the rotor, in particular, tooth portion 52 and damper wedge 84. During rotation, only a centrifugal force due to the weight of the rotor itself is exerted to the rotor, and a safe and firm structure can be obtained.

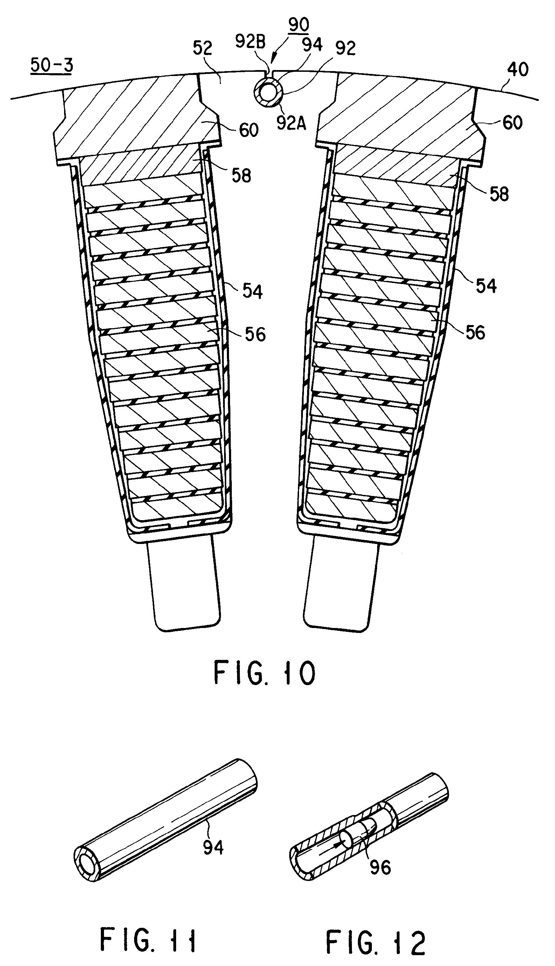

Next, a further rotor 50-3 of the rotary electric-machine will now be described. As shown in Fig. 10, damper means 90 is provided at a tooth portion 52 of a non-magnetic-pole portion of a cylindrical rotor core 40. The damper means 90 may be provided at all tooth portions 52 or at some of them. Slots 54 are formed on both sides of the tooth portion 52. A rotor coil 56 is stored in each slot 54. A block 58 is situated on the upper part of the rotor coil 56. The rotor coil 56 and block 58 are held in the slot 54 by means of a wedge 60.

As shown in Figs. 10, 11 and 12, each damper means 90 is formed at the tooth portion 52, and it comprises a hollow bar insertion groove portion 92 constituted by a hollow bar insertion portion 92A with a substantially circular cross section and a gap portion 9B, and a hollow bar 94 of an electrically conductive material inserted in the insertion portion 92A of the insertion groove portion 92.

Specifically, as shown in Figs. 10, 11 and 12, the hollow bar insertion groove portion 92 is formed at the tooth portion 52 between slots 54 for storing rotor coils 56. The hollow bar 94 or fixing member of electrically conductive material is inserted in the insertion groove portion 92. After the hollow bar 94 is inserted in the hollow bar insertion groove portion 92, an expansion rod 96 is inserted into the hollow bar 94, using an expanding method, so as to expand the outer shape of the hollow bar 94. Thus, the hollow bar 94 is fitted in the insertion groove portion 92.

In the rotor of Fig. 10, the hollow bar 94 is pressed on the tooth portion. Thus, the contact surfaces of the tooth portion 52 and the hollow bar 94 are constantly pressed thereby maintaining good contact. Even if current is let to flow over the rotor surface, no damage is caused to the respective parts of the rotor, in particular, tooth portion 52 and wedge 60. During rotation, only a centrifugal force due to the weight of the rotor itself is exerted to the rotor, and a safe and firm structure can be obtained.

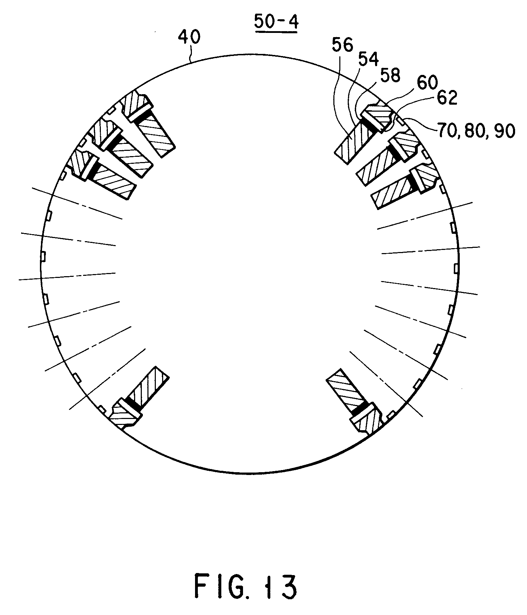

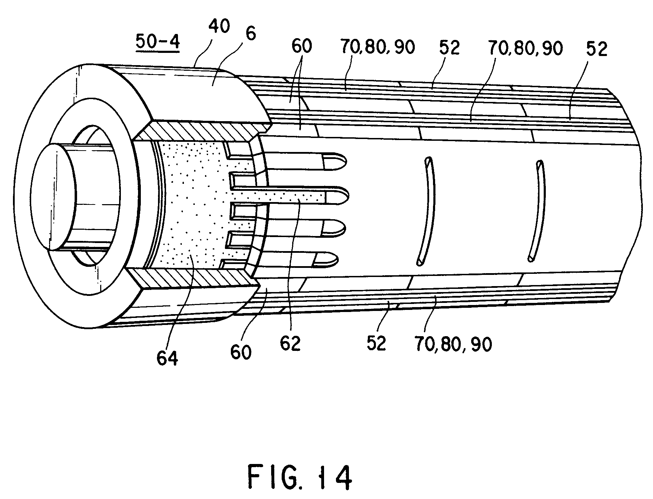

A rotor 50-4 of the rotary electric-machine according to a second embodiment of the invention will now be described with reference to Figs. 13 and 14. As shown in Fig. 13, the rotor 50-4 has any one of damper means 70, 80 and 90, described above, at a tooth portion 52 of a non-magnetic-pole portion of a cylindrical rotor core 40. A rotor coil 56 is stored in each slot 54. A block 58 is situated on the upper part of the rotor coil 56. The rotor coil 56, block 58 and damper bar 62 are held in the slot 54 by means of a wedge 60. This slot is basically similar to that shown in Fig. 1. Accordingly, a holder such as an elastic member for holding the damper bar 62 in the slot 54 is provided in the slot 54 on an as-needed basis.

As is shown in Fig. 14, damper bars 62 provided under wedges 60 are integral with an end ring (damper ring) 64. An end portion of a rotor coil 56 and the end ring (damper ring) 64 are held to the end of the iron core by a retaining ring (damper ring) 6. The retaining ring (damper ring) 6 is shrinkage-fitted at the end of the iron core.

The rotor 50-4 of the rotary electric-machine according to the second embodiment has the same advantages as the rotors 50-1, 50-2 and 50-3 of the rotary electric-machines, as well as the same advantage as the rotor 10 shown in Fig. 1.

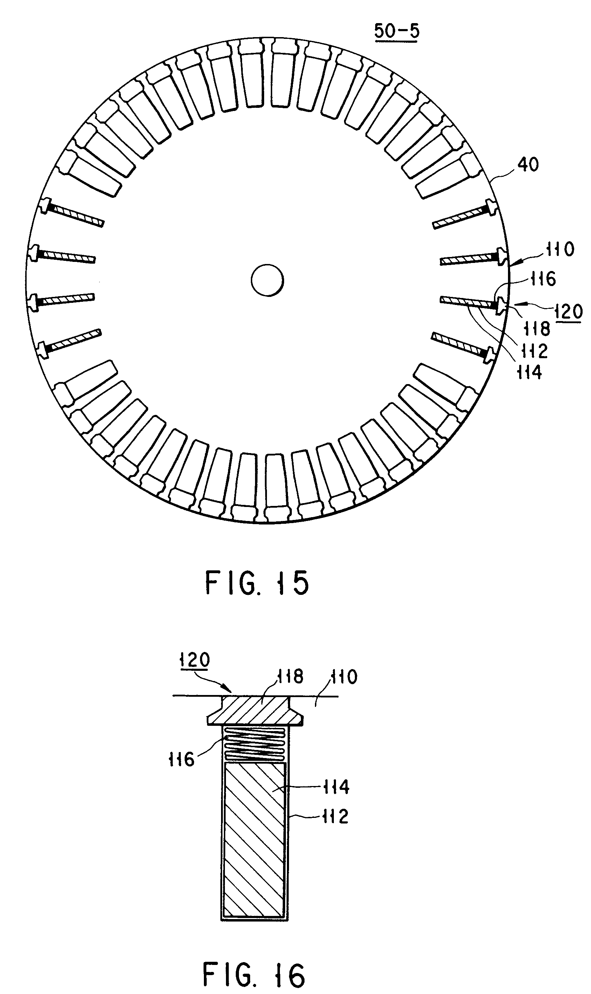

A third embodiment of the present invention will now be described. As is shown in Figs. 15 and 16, a pole portion 110 of a cylindrical rotor iron core 40 is provided with a plurality of damper means 120. The damper means 120 comprises a deep groove portion 112, a magnetic material 114 filled in the deep groove portion 112, an elastic member 116 such as a spring situated at the upper part of the magnetic material 114, and a damper wedge 118 or fixing member made of electrically conductive material and situated at the upper part of the elastic member 116. The dimensions of the deep groove portion 112 are set such that the rotor body has the same axial rigidity in the magnetic pole direction and inter-pole direction.

In the third embodiment, the damper wedge 118 is pressed on the pole portion 110. Thus, the contact surfaces of the pole portion 110 and damper wedge 118 are constantly pressed thereby maintaining good contact. Even if current is let to flow over the rotor surface, no damage is caused to the respective parts of the rotor, in particular, pole portion 110 and damper wedge 118. During rotation, only a centrifugal force due to the weight of the rotor itself is exerted to the rotor, and a safe and firm structure can be obtained.

The above will now be explained based on analysis data.

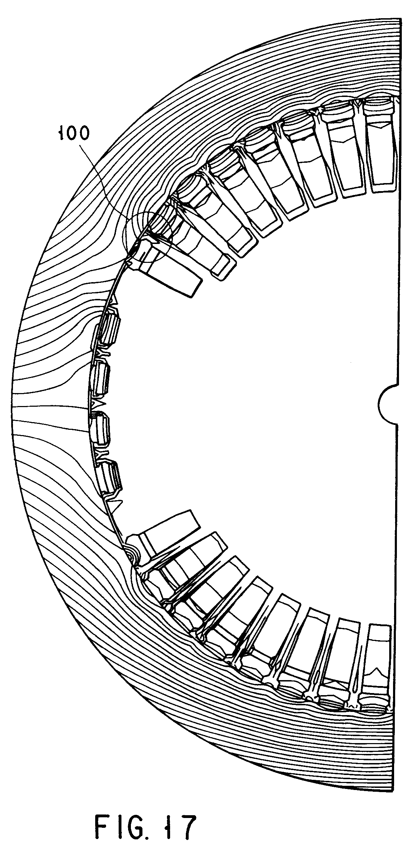

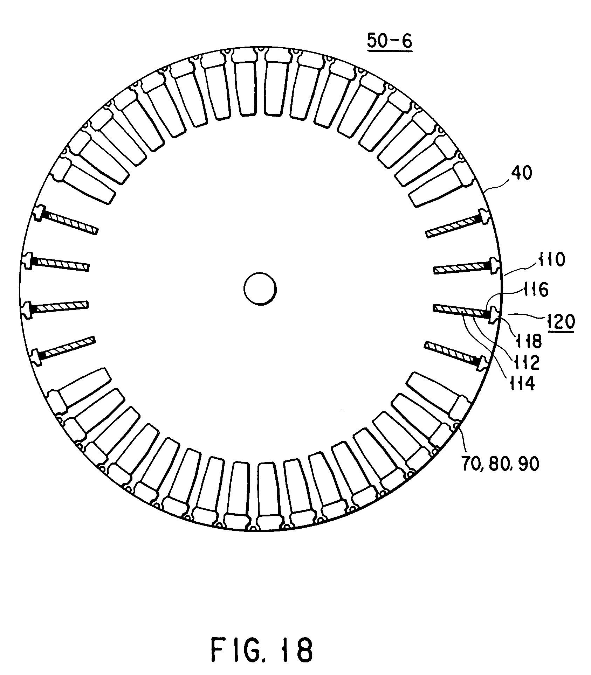

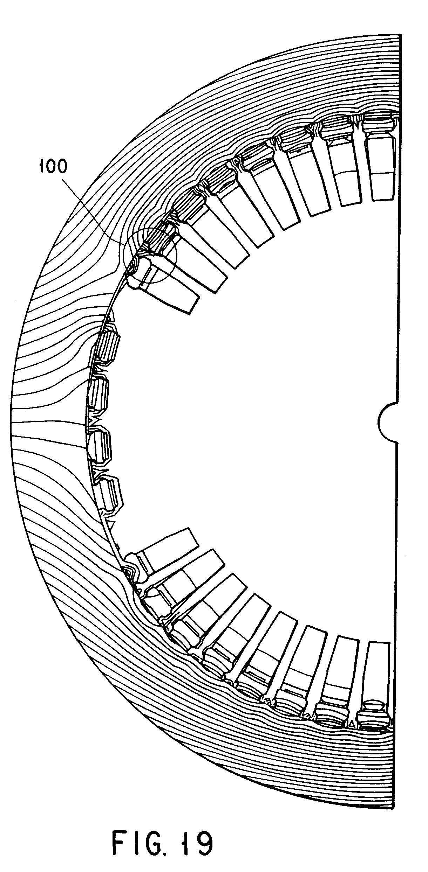

Fig. 17 shows a magnetic flux distribution in the rotor and air gap in the case where an equivalent negative-phase current in a rotor structure with damper means 120 flows through the pole portion according the third embodiment of Fig. 15. Fig. 19 shows a structure according to a fourth embodiment shown in Fig. 18 wherein the second embodiment is combined with the third embodiment. Fig. 19 shows a magnetic flux distribution in the rotor and air gap in the case where an equivalent negative-phase current flows in the structure of a rotor 50-6 wherein the damper means 70, 80 or 90 is provided at the tooth portion 52 of the cylindrical rotor iron core 40 and the damper means 120 is provided at the pole portion 110.

Portions 100 to be notices in Figs. 17 to 19 will now be compared. In Fig. 17, in a rotor structure (case D) wherein damper means 120 is provided at the pole portion 110, the loss occurring in the pole portion 110 is reduced by the damper means 120. Further, as shown in Fig. 19, in a rotor structure (case E) wherein the damper means 70, 80 or 90 is provided at the tooth portion 52 and the damper means 120 is provided at the pole portion 110, the loss occurring in the tooth portion 52 and pole portion 110 is further reduced.

The analysis data is shown in Fig. 7. The loss in the ordinary rotor structure (case A) with no damper bar is supposed to be 1.0 per unit. The loss in the rotor structure (case D) is 0.6 per unit, and the loss in the rotor structure (case E) is 0.45 per unit. Without damaging the tooth portions and wedges, a stronger rotor of the rotary electric-machine can be obtained and the negative-phase withstanding capability is enhanced.

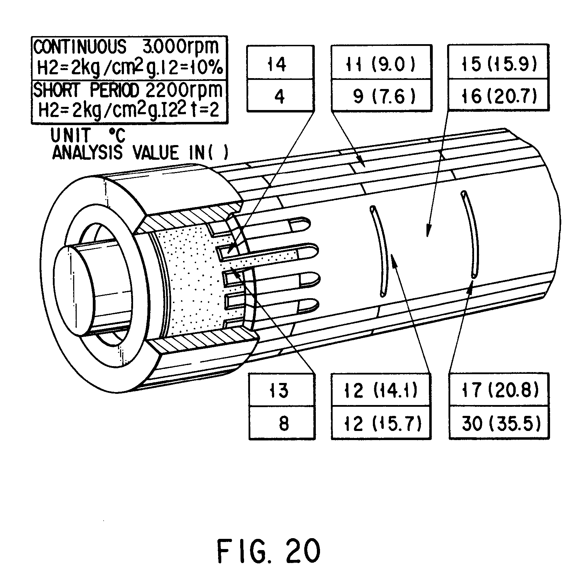

In particular, where the rotor structure wherein the damper means 120 is provided at the magnetic pole portion 110 is employed, an additional groove portion can easily be formed under the groove 112, and the magnetic material can be filled in the additional groove portion. In this case, by controlling the dimensions of the groove portion under the wedge, the axial rigidity of the rotor in the magnetic pole direction can be equalized to that in the inter-pole direction. In the normal rotor structure having a cross slot, the temperature of the end portion of the cross slot is high, as shown in Fig. 20, and this part is the weakest point in consideration of negative-phase withstanding capability. By contrast, in the rotor structure of the present embodiment, the cross slot is not required, and the maximum temperature of the shaft can be decreased to about 50%. Accordingly, the negative-phase withstanding capability can be increased.

As has been described above, the present invention provides a highly reliable rotor of a rotary electric-machine wherein no damage is caused to the respective parts of the rotor, even if current flows over the rotor surface when the rotary electric-machine is stopped or rotated at low speed.

## Claims

1. A rotor of a rotary electric-machine comprising:
a cylindrical rotor core (40);
a plurality of winding portions formed on the cylindrical rotor core (40) and constituted by a plurality of pole portions and a plurality of slots (54) and tooth portions (52);
rotor coils (56) stored in the slots (54);
a plurality of wedges (60) inserted in the slots (54) and retaining the rotor coils (56);
an end ring (64) provided at an axial end portion of the cylindrical rotor core (40); and
a retaining ring (6) fitted on the axial end portion of the cylindrical rotor core (40) and retaining the end ring (64) and the end portions of the rotor coils (56);
characterized in that
first damper means (80) formed at at least one of the tooth portions, for damping a surface current flowing through the cylindrical rotor core (40), the pole portions, and the surface of the winding portions, comprises:
a wedge insertion groove (82) formed at at least one of the tooth portions;
a damper wedge (84) of an electrically conductive material inserted in the wedge insertion groove (82); and
an elastic member (86) for urging the damper wedge (84) in the radially outward direction of the cylindrical rotor core (40) (Fig. 8).

2. A rotor of a rotary electric-machine according to claim 1, characterized by further comprising:
second damper means formed at at least one of the slots (54), for damping a surface current flowing through the cylindrical rotor core (40), the pole portions, and the surface of the winding portion.

3. A rotor of a rotary electric-machine comprising:
a cylindrical rotor core (40);
a plurality of winding portions formed on the cylindrical rotor core (40) and constituted by a plurality of pole portions and a plurality of slots (54) and tooth portions (52);
rotor coils (56) stored in the slots (54);
a plurality of wedges (60) inserted in the slots (54) and retaining the rotor coils (56);
an end ring (64) provided at an axial end portion of the cylindrical rotor core (40); and
a retaining ring (6) fitted on the axial end portion of the cylindrical rotor core (40) and retaining the end ring (64) and the end portions of the rotor coils (56);
characterized in that
at least one damper means (120) formed at said pole portions, for damping a surface current flowing through the cylindrical core (40), the pole portions, and the surface of the winding portions, comprises:
at least one deep groove (112) formed at the pole portions;
magnetic material (114) inserted in the deep groove (112);
a damper wedge (118) inserted in the deep groove (112); and
an elastic member (116), situated between the magnetic material (114) and the damper wedge (118), for holding the magnetic material (114), and the damper wedge (118) in the deep groove (112) (Fig. 15).

4. A rotor of a rotary electric-machine according to claim 1, characterized by further comprising:
second damper means (120) formed at the pole portions, for damping a surface current flowing through the cylindrical rotor core (40), the pole portions, and the surface of the winding portions, wherein:
said second damper means (120) comprises:
at least one deep groove (112) formed at the pole portions;
a magnetic material (114) inserted in the deep groove (112);
a damper wedge (118) inserted in the deep groove (112); and
an elastic member (116), situated between the magnetic material (114) and the damper wedge (118), for holding the magnetic material (114) and the damper wedge (118) in the deep groove (112) (Fig. 18).

5. The rotor of the rotary electric-machine according to any one of claims 1, 3 or 4, characterized in that said damper means is flush with the surface of the cylindrical rotor core (40).

## Patentansprüche

1. Rotor einer drehenden elektrischen Maschine mit:
einem zylindrischen Rotorkern (40);
einer Vielzahl von Wicklungsteilen, die auf dem zylindrischen Rotorkern (40) ausgebildet sind und aus einer Vielzahl von Polteilen und einer Vielzahl von Schlitzen (54) und Zahnteilen (52) bestehen;
Rotorspulen (56), die in den Schlitzen (54) aufgenommen sind;
einer Vielzahl von Keilen (60), die in die Schlitze (54) eingefügt sind und die Rotorspulen (56) zurückhalten;
einem Abschlußring (64), der an einem axialen Endteil des zylindrischen Rotorkerns (40) vorgesehen ist; und
einem Rückhaltering (6), der auf den axialen Endteil des zylindrischen Rotorkerns (40) gepaßt ist und den Abschlußring (64) und die Abschlußteile der Rotorspulen (56) zurückhält;
dadurch gekennzeichnet, daß
eine erste Dämpfungseinrichtung (80), die zur Dämpfung eines durch den zylindrischen Rotorkern (40), die Polteile und die Oberfläche der Wicklungsteile fließenden Oberflächenstroms zumindest an einem der Zahnteile ausgebildet ist, enthält:
einen Keileinfügegraben (82), der zumindest in einem der Zahnteile ausgebildet ist;
einem Dämpfungskeil (84) aus elektrisch leitendem Material, der in den Keileinfügegraben (82) eingebracht ist; und
ein elastisches Bauteil (86), um den Dämpfungskeil (84) in radialer Auswärtsrichtung des zylindrischen Rotorkerns (40) (Fig. 8) zu drängen.

2. Rotor einer drehenden elektrischen Maschine nach Anspruch 1, gekennzeichnet durch weiterhin enthaltend:
zweite Dämpfungseinrichtung, die zumindest an einem der Schlitze (54) ausgebildet ist, um einen durch den zylindrischen Rotorkern (40), die Polteile und die Oberfläche des Wicklungsteils fließenden Oberflächenstrom zu dämpfen.

3. Rotor einer drehenden elektrischen Maschine mit:
einem zylindrischen Rotorkern (40);
einer Vielzahl von Wicklungsteilen, die auf dem zylindrischen Rotorkern (40) ausgebildet sind und aus einer Vielzahl von Polteilen und einer Vielzahl von Schlitzen (54) und Zahnteilen (52) bestehen;
Rotorspulen (56), die in den Schlitzen (54) aufgenommen sind;
einer Vielzahl von Keilen (60), die in die Schlitze (54) eingefügt sind und die Rotorspulen (56) zurückhalten;
einem Abschlußring (64), der an einem axialen Endteil des zylindrischen Rotorkerns (40) vorgesehen ist; und
einem Rückhaltering (6), der auf den axialen Endteil des zylindrischen Rotorkerns (40) gepaßt ist und den Abschlußring (64) und die Abschlußteile der Rotorspulen (56) zurückhält;
dadurch gekennzeichnet, daß
mindestens eine Dämpfungseinrichtung (120), die an den Polteilen ausgebildet ist, um einen durch den zylindrischen Kern (40), die Polteile und die Oberfläche der Wicklungsteile fließenden Oberflächenstroms zu dämpfen, enthält:
mindestens einen tiefen Graben (112), der an den Polteilen ausgebildet ist;
magnetisches Material (114), das in den tiefen Graben (112) eingefügt ist;
einen Dämpfungskeil (118), der in den tiefen Graben (112) eingefügt ist; und
ein elastisches Bauteil (116), das zwischen dem magnetischen Material (114) und dem Dämpfungskeil (118) gelegen ist, zum Halten des magnetischen Materials (114) und des Dämpfungskeils (118) im tiefen Graben (112) (Fig. 15).

4. Rotor einer drehenden elektrischen Maschine nach Anspruch 1, gekennzeichnet durch weiterhin enthaltend:
eine zweite Dämpfungseinrichtung (120), die an den Polteilen ausgebildet ist, um einen durch den zylindrischen Rotorkern (40), die Polteile und die Oberfläche der Wicklungsteile fließenden Oberflächenstrom zu dämpfen, wobei:
die zweite Dämpfungseinrichtung (120) enthält:
mindestens einen tiefen Graben (112), der an den Polteilen ausgebildet ist;
ein magnetisches Material (114), das in den tiefen Graben (112) eingefügt ist;
einen Dämpfungskeil (118), der in den tiefen Graben (112) eingefügt ist; und
ein elastisches Bauteil (116), das zwischen dem magnetischen Material (114) und dem Dämpfungskeil (118) gelegen ist, zum Halten des magnetischen Materials (114) und des Dämpfungskeils (118) im tiefen Graben (112) (Fig. 18).

5. Rotor der drehenden elektrischen Maschine nach einem der Ansprüche 1, 3 oder 4, dadurch gekennzeichnet, daß die Dämpfungseinrichtung mit der Oberfläche des zylindrischen Rotorkerns (40) bündig ist.

## Revendications

1. Rotor de machine électrique tournante, comprenant :
un noyau (40) de rotor cylindrique,
plusieurs parties d'enroulement formées sur le noyau (40) de rotor cylindrique et constituées de plusieurs parties polaires et plusieurs parties de fentes (54) et parties de dents (52),
des bobines (56) de rotor logées dans les fentes (54), plusieurs coins (60) introduits dans les fentes (54) et retenant les bobines (56) de rotor,
un anneau d'extrémité (64) placé à une partie d'extrémité axiale du noyau (40) de rotor cylindrique, et
un anneau de retenue (6) monté sur la partie d'extrémité axiale du noyau (40) de rotor cylindrique et retenant l'anneau d'extrémité (64) et des parties d'extrémité des bobines (56) de rotor,
caractérisé en ce que
un premier dispositif amortisseur (80) formé sur l'une au moins des parties de dents et destiné à amortir un courant de surface circulant dans le noyau (40) du rotor cylindrique, les parties de pôles et la surface des parties d'enroulement, comporte :
une gorge (82) d'introduction de coin formée sur l'une au moins des parties de dents,
un coin amortisseur (84) formé d'un matériau conducteur de l'électricité et introduit dans la gorge (82) d'introduction de coin, et
un organe élastique (86) destiné à rappeler le coin amortisseur (84) en direction radiale vers l'extérieur du noyau (40) de rotor cylindrique (figure 8).

2. Rotor de machine électrique tournante selon la revendication 1, caractérisé en ce qu'il comprend un second dispositif amortisseur formé dans l'une au moins des fentes (54) et destiné à amortir un courant de surface circulant dans le noyau (40) de rotor cylindrique, les parties polaires et la surface de la partie d'enroulement.

3. Rotor de machine électrique tournante, comprenant :
un noyau (40) de rotor cylindrique,
plusieurs parties d'enroulement formées sur le noyau (40) de rotor cylindrique et constituées par plusieurs parties de pôles et plusieurs fentes (54) et parties de dents (52),
des bobines (56) de rotor logées dans les fentes (54), plusieurs coins (60) introduits dans les fentes (54) et retenant les bobines (56) de rotor,
un anneau d'extrémité (64) placé dans une partie d'extrémité axiale du noyau (40) de rotor cylindrique, et
un anneau de retenue (6) logé dans la partie d'extrémité axiale du noyau (40) de rotor cylindrique et retenant l'anneau d'extrémité (64) et les parties d'extrémité des bobines (56) de rotor,
caractérisé en ce que
au moins un dispositif amortisseur (120), formé sur les parties de pôles et destiné à amortir un courant de surface circulant dans le noyau cylindrique (40), les parties de pôles et la surface des parties d'enroulement, comporte :
au moins une gorge profonde (112) formée au niveau des parties de pôles,
un matériau magnétique (114) introduit dans la gorge profonde (112),
un coin amortisseur (118) introduit dans la gorge profonde (112), et
un organe élastique (116) placé entre le matériau magnétique (114) et le coin amortisseur (118) et destiné à maintenir le matériau magnétique (114) et le coin amortisseur (118) dans la gorge profonde (112) (figure 15).

4. Rotor de machine électrique tournante selon la revendication 1, caractérisé en ce qu'il comporte en outre :
un second dispositif amortisseur (120) formé au niveau des parties de pôles et destiné à amortir un courant de surface circulant dans le noyau (40) du rotor cylindrique, les parties de pôles et la surface des parties d'enroulement, et dans lequel :
le second dispositif amortisseur (120) comporte :
au moins une gorge profonde (112) formée au niveau des parties de pôles,
un matériau magnétique (114) introduit dans la gorge profonde (112),
un coin amortisseur (118) introduit dans la gorge profonde (112), et
un organe élastique (116) placé entre le matériau magnétique (114) et le coin amortisseur (118) et destiné à maintenir le matériau magnétique (114) et le coin amortisseur (118) dans la gorge profonde (112) (figure 18).

5. Rotor de machine électrique tournante selon l'une des revendications 1, 3 et 4, caractérisé en ce que le dispositif amortisseur arrive au niveau de la surface du noyau (40) du rotor cylindrique.
